# FASCICULE DE BREVET EUROPEEN

(11) **EP 2 763 859 B1**
(45) Date de publication et mention de la délivrance du brevet: **18.01.2017**
(21) Numéro de dépôt: 12768844.8
(22) Date de dépôt: 05.10.2012
(51) Int. Cl.: B60B 19/14, B60B 33/08

(54) **ROUE OMNIDIRECTIONNELLE MOTORISABLE ET VEHICULE QUI EN EST EQUIPE**
MULTIDIRECTIONALES ANTREIBBARES RAD UND DAMIT AUSGERÜSTETES FAHRZEUG
OMNIDIRECTIONAL WHEEL THAT CAN BE DRIVEN BY A MOTOR, AND VEHICLE PROVIDED THEREWITH

(30) Priorité: 06.10.2011 FR 1159013
(43) Date de publication de la demande: 13.08.2014
(73) Titulaire: Commissariat à l'Énergie Atomique et aux Énergies Alternatives, 75015 Paris (FR)
(72) Inventeur: RIWAN, Alain, F-94550 Chevilly-Larue (FR); VERNEY, Alexandre, F-38000 Grenoble (FR)
(74) Mandataire: Lavialle, Bruno François Stéphane
(86) Numéro de dépôt international: PCT/EP2012/069701
(87) Numéro de publication internationale: WO 2013/050518

(56) Documents cités:
- WO-A1-01/30635
- DE-A1- 3 414 859
- DE-C- 78 488
- DE-C- 119 513
- NL-A- 7 810 429
- US-A- 5 325 935

## Description

La présente invention concerne une roue omnidirectionnelle motorisable. Les roues omnidirectionnelles sont utilisées pour réaliser des véhicules capables de se déplacer sans manoeuvre préalable dans n'importe quelle direction arbitraire avec une orientation quelconque. On parle alors de véhicule « holonome ». L'invention concerne également un véhicule équipé de telles roues.

Les véhicules classiques à roues suivent une trajectoire tangente à l'orientation de leurs roues directrices, orientation que l'on modifie pour changer de direction.

La présence de roues non directrices et la faible amplitude de l'orientation des roues directrices rend impossible un changement de direction indépendant de l'orientation préalable du véhicule.

Un véhicule à roues dont toutes les roues sont directrices peut changer arbitrairement de direction à la condition que ses roues aient été préalablement réorientées dans la nouvelle direction. Un tel véhicule est dit « omnidirectionnel ».

Un véhicule holonome doit, pour pouvoir suivre n'importe quelle trajectoire arbitraire sans manoeuvre préalable, avoir trois degrés de mobilité indépendants par rapport au plan sur lequel il repose : deux translations selon des directions parallèles au plan et une rotation autour d'un axe normal au plan.

Il existe de nombreuses solutions de roues qui permettent de réaliser un véhicule holonome. Ces roues diffèrent par la régularité de leur bande de roulement, leur capacité de charge, leur capacité de franchissement d'obstacle et la constance du polygone de sustentation du véhicule les utilisant.

Ainsi, il est connu du document US-A-3789947 une telle roue comportant une jante ayant un pourtour polygonal sur chaque côté duquel sont montés des rouleaux en tonneau qui pivotent autour d'un axe orthogonal à l'axe de la jante. Entre deux rouleaux adjacents existe un espace intercalaire nécessaire à la liaison des rouleaux à la jante. Ces espaces intercalaires entre les rouleaux créent une discontinuité de la surface de roulement qui entraîne, à l'usage, des vibrations et une imprécision de la position. DE 78 488 C divulgue une roue sphérique selon le préambule de la revendication 1.

Sur le même principe, il existe également des roues du type précédent comportant une jante sur la périphérie de laquelle sont montés deux jeux de rouleaux montés pour pivoter autour d'axes s'étendant dans deux plans perpendiculaires à l'axe de rotation de la jante. Les rouleaux de chaque jeu s'étendent en regard de l'espace intercalaire existant entre deux rouleaux de l'autre jeu pour assurer une continuité de la surface de roulement. Néanmoins, en passant d'un rouleau à l'autre, la position du point de contact varie le long de l'axe de rotation de la jante. Cette variation entraîne d'une part des variations du rayon de courbure empêchant une odométrie précise et d'autre part une grande sensibilité aux irrégularités du sol qui risque de faire perdre le contact d'une rangée de rouleaux.

Les documents US-A-3876255 et FR-A-2206195 décrivent une roue ayant une jante sur une périphérie de laquelle sont montés des rouleaux pivotant autour d'un axe incliné par rapport à l'axe de rotation de la jante. Ceci permet d'assurer une relative continuité de la surface de roulement mais entraîne, comme précédemment quoique de manière moins importante, une variation de la position du point de contact de la roue sur le sol.

Il existe d'autres solutions, sur le principe du document US-A-3789947, dans lesquelles les rouleaux, de profils différents ou en forme de coupelle, sont partiellement emboîtés les uns dans les autres pour assurer autant que faire se peut une relative continuité de la surface de roulement. Ces solutions ne sont cependant pas parfaites et, selon le cas, ne sont pas adaptées à évoluer sur un sol incliné, sont complexes à mettre en oeuvre et/ou laissent subsister des discontinuités de la surface de roulement.

On connaît également des roues à rouleaux périphériques flexibles ayant une surface de roulement continue mais qui est très complexe à mettre en oeuvre tout en offrant qu'une faible capacité de charge.

L'inconvénient majeur de ces solutions reste qu'elles ne possèdent qu'une faible capacité de franchissement d'obstacle dans la direction de l'axe de rotation de la jante en raison du faible rayon des rouleaux.

Pour remédier à cet inconvénient, il a été imaginé de recourir à une roue sphérique motorisable comprenant un premier corps et un deuxième corps qui sont sensiblement hémisphériques et montés coaxialement l'un à l'autre pour pivoter sur un axe support. Les corps sont séparés par un espace intercalaire dans lequel s'étend un arbre ayant une extrémité solidaire de l'axe support et une extrémité opposée reliée à un moteur d'entraînement. Cette roue présente une capacité de déplacement libre parallèlement à l'arbre d'entraînement et une capacité de déplacement motorisé perpendiculairement à l'arbre d'entraînement. Cette roue possède en outre des capacités de franchissement intéressantes dans toutes les directions car son rayon de courbure est identique dans toutes les directions. En revanche, cette roue a une surface de roulement dont la discontinuité diminue avec la largeur de l'espace intercalaire tandis que sa capacité de charge augmente avec le diamètre de l'arbre et donc aussi avec la largeur de l'espace intercalaire. Il est donc impossible d'avoir une telle roue présentant une surface de roulement sensiblement continue et une forte capacité de charge.

Le but de l'invention est donc de fournir une roue permettant notamment la réalisation d'un véhicule holonome capable de franchir des obstacles dans toutes les directions sans réduction de sa capacité de charge.

A cet effet, on prévoit, selon l'invention, une roue sphérique motorisable comprenant un premier corps et un deuxième corps qui sont sensiblement hémisphériques et montés coaxialement l'un à l'autre pour pivoter sur un axe support, les corps étant séparés par un espace intercalaire dans lequel s'étend un arbre ayant une extrémité solidaire de l'axe support et une extrémité opposée en saillie des corps. S'étend dans l'espace intercalaire au moins un élément de continuité d'au moins une portion de surface externe des corps.

La roue de l'invention est ainsi une roue omnidirectionnelle sphérique dont l'espace intercalaire peut être relativement grand au niveau de l'arbre moteur, pour autoriser une grande capacité de charge, et réduit voire nul au niveau du contact au sol pour assurer une bonne continuité de mouvement.

Selon un premier mode de réalisation de l'invention, l'élément de continuité est un pétale articulé à un bord circulaire du premier corps pour être mobile entre une position affleurante dans laquelle il s'étend vers le deuxième corps dans l'espace intercalaire et une position escamotée dans laquelle il s'efface de l'espace intercalaire.

Dans une première version, la roue comprend des éléments de continuité en forme de pétale s'étendant à partir de chacun des corps.

Dans une deuxième version, le pétale en position affleurante prend appui sur le bord circulaire du deuxième corps.

De préférence, dans ce mode de réalisation, l'arbre a sa portion d'extrémité reliée à l'arbre support conformée pour amener l'élément de continuité de sa position affleurante à sa position escamotée et l'élément de continuité est relié, au corps auquel il est articulé, par un élément de rappel élastique en position affleurante.

Ainsi, le déplacement de l'élément de continuité dans sa position escamotée est provoqué par son contact avec le carter de l'arbre moteur qui fait office de came. Il n'est donc pas nécessaire de prévoir une commande dédiée de l'élément de continuité.

Avantageusement, le pétale a une forme sensiblement trapézoïdale ayant une grande base et le pétale est articulé par sa grande base au corps.

Ceci permet d'augmenter la garde au sol de l'élément de continuité en position escamotée et donc la capacité de franchissement.

Selon un deuxième mode de réalisation, l'élément de continuité est un galet monté dans l'espace intercalaire pour pivoter autour d'un axe parallèle à l'axe support en ayant une surface externe affleurant la surface externe des corps.

Selon une caractéristique particulière, la roue comprend des galets montés dans un logement ménagé dans chaque corps à chaque extrémité de l'axe support de telle manière que chacun de ces galets ait une portion de surface extérieure affleurant la surface externe du corps par une ouverture du logement, les galets étant montés pour pivoter autour d'un axe de rotation orthogonal à l'axe support et à l'arbre. De préférence, la surface extérieure de ces galets a sensiblement une forme de révolution autour de l'axe de rotation des galets et comporte une portion centrale annulaire de roulement affleurant la surface externe du corps par l'ouverture du logement et deux portions latérales annulaires qui s'étendent au moins partiellement sous une lèvre délimitant l'ouverture du logement.

Avantageusement, la lèvre est susceptible de se déformer élastiquement et les portions latérales annulaires forment une surface d'appui pour la lèvre dans son état déformé et, de préférence, les portions latérales annulaires comportent un revêtement à faible coefficient de frottement.

L'invention a également pour objet un véhicule comportant un châssis porté par des roues du type de celle de l'invention.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue en perspective d'une roue selon une première version d'un premier mode de réalisation ;
- la figure 2 est une vue de dessus de cette roue ;
- la figure 3 est une vue partielle en coupe de cette roue selon le plan III de la figure 2 ;
- la figure 4 est une vue en perspective de cette roue en coupe selon le plan III ;
- la figure 5 est une vue en perspective d'une roue selon une deuxième version du premier mode de réalisation ;
- la figure 6 est une vue de côté de cette roue ;
- la figure 7 est une vue en perspective et en transparence d'une roue selon un deuxième mode de réalisation ;
- la figure 8 est une vue en perspective d'un véhicule équipé de roues selon le deuxième mode de réalisation ;
- La figure 9 est une vue analogue à la figure 8 d'une variante de ce véhicule ;
- La figure 10 est une vue schématique en coupe transversale d'une roue conforme à une variante du deuxième mode de réalisation.

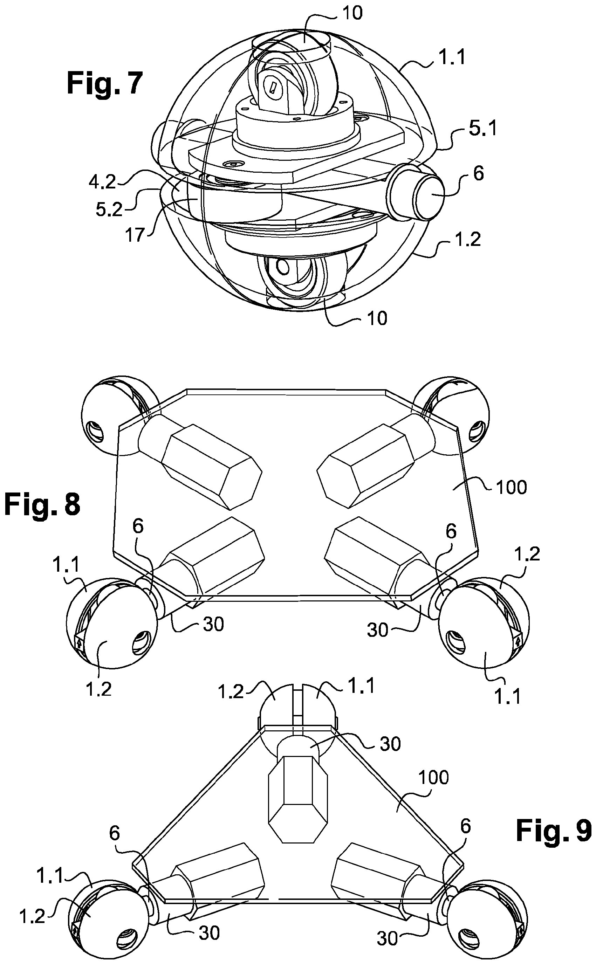

En référence aux figures, la roue sphérique motorisable conforme à l'invention comprend un premier corps 1.1 et un deuxième corps 1.2 identiques qui sont sensiblement hémisphériques. Les corps 1.1, 1.2 sont montés coaxialement l'un à l'autre pour pivoter librement sur un axe support 2 au moyen d'au moins un palier tel qu'un roulement à aiguilles ou autres. Les corps 1.1, 1.2 sont séparés l'un de l'autre par un espace intercalaire 3 délimité latéralement par des parois 4.1, 4.2 parallèles l'une à l'autre appartenant chacune à une des corps 1.1, 1.2. Les parois 4.1, 4.2 sont délimitées par un bord circulaire 5.1, 5.2. Dans l'espace intercalaire 3 s'étend un arbre 6 ayant une extrémité solidaire de l'axe support 2 et une extrémité opposée qui s'étend en saillie des corps 1.1 et 1.2 et qui est reliée à un moteur d'entraînement 30 (visible sur les figures 8 et 9).

La roue est ainsi susceptible d'un déplacement motorisé (rotation de l'arbre 6 symbolisé par la flèche M) et d'un déplacement libre (rotation des corps 1.1, 1.2 autour de l'axe support 2 symbolisé par la flèche F)

Un galet 10 (représenté uniquement en figure 7 mais présent dans tous les modes de réalisation) est monté à chaque extrémité de l'axe support 2 pour affleurer la surface externe des corps 1.1, 1.2. Les galets 10 ont une forme en tonneau et sont montés pour pivoter autour d'un axe orthogonal à l'axe support 2 et à l'arbre 6. Chaque galet 10 autorise ainsi, lorsqu'il est en contact avec le sol, un déplacement libre de la roue dans une direction parallèle à l'arbre 6.

Dans l'espace intercalaire 3 s'étend au moins un élément de continuité d'au moins une portion de surface externe des corps 1.1, 1.2.

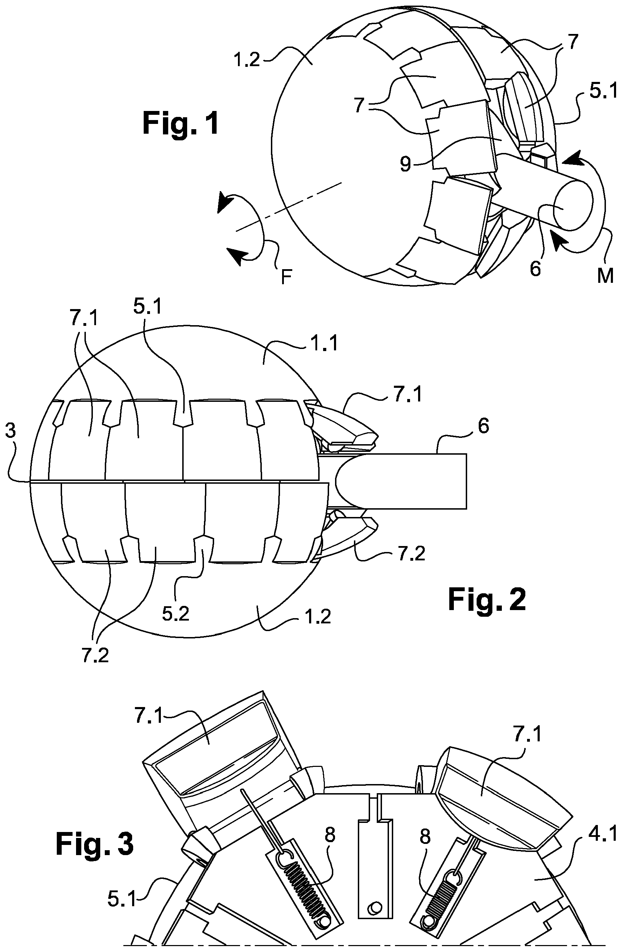

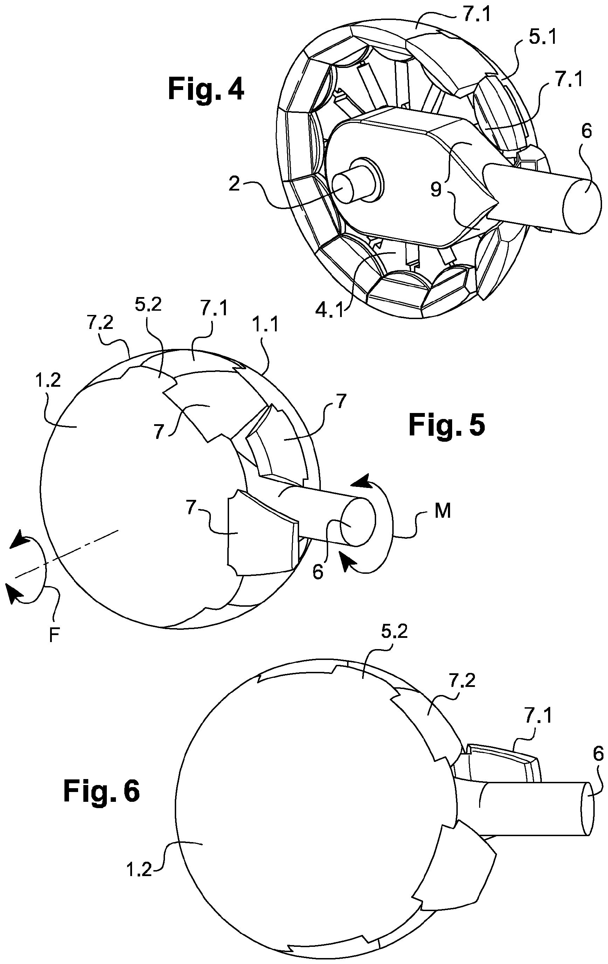

En référence aux figures 1 à 6, la roue conforme au premier mode de réalisation comprend une pluralité d'éléments de continuité formé chacun d'un pétale articulé au bord circulaire 5.1, 5.2 d'un des corps 1.1, 1.2 entre une position affleurante dans laquelle il s'étend dans l'espace intercalaire 3 vers le deuxième corps 1.2, 1.1 et une position escamotée dans laquelle il s'efface de l'espace intercalaire 3 en prenant une position en saillie de la surface externe des corps 1.1, 1.2. Chaque pétale 7 a une forme sensiblement trapézoïdale ayant une grande base et le pétale 7 est articulé par sa grande base au corps. Cette forme trapézoïdale autorise une garde au sol relativement importante du pétale en position escamotée (voir la figure 6).

Dans la première version du premier mode de réalisation (figures 1 à 4), des pétales 7.1, 7.2 s'étendent à partir de chacun des corps 1.1, 1.2. Les pétales 7.1, 7.2 sont ici prévus sur la totalité de la circonférence du bord circulaire 5.1, 5.2. Chaque pétale 7.1, 7.2 est relié, au corps 1.1, 1.2 auquel il est articulé, par un élément de rappel élastique du pétale 7.1, 7.2 en position affleurante. Les éléments de rappel sont ici des ressorts hélicoïdaux 8 de traction qui sont reçus dans des logements ménagés dans les parois 4.1, 4.2 de manière à s'étendre radialement par rapport au bord circulaire 5.1, 5.2.

L'arbre 6 a sa portion d'extrémité relié à l'axe support 2 qui est conformée pour amener les pétales 7 de leur position affleurante à leur position escamotée. L'arbre 6 comprend ainsi deux surfaces latérales 9 s'étendant transversalement à l'espace intercalaire 3 qui sont conformées pour soulever les pétales 7 à la manière d'une came lorsqu'elles rentrent en contact avec ceux-ci. Les pétales 7 sont ramenés vers leur position affleurante au fur et à mesure qu'ils quittent le contact des surfaces latérales 9.

Dans la deuxième version du premier mode de réalisation (figures 5 et 6), les pétales 7.1, sont décalés par rapport aux pétales 7.2 de telle manière qu'en regard de chaque pétale 7.1, 7.2 s'étend une portion libre du bord circulaire 5.2, 5.1. Les pétales 7.1, 7.2 ont une longueur telle qu'en position affleurante les pétales 7.1, 7.2 prennent appui sur la portion libre de bord circulaire 5.2, 5.1.

Dans cette version les deux hémisphères sont reliés ensemble pour synchroniser leur rotation de façon à ce que les pétales s'appuient toujours sur le logement qui leur fait face.

La deuxième version est pour le reste identique à la première version.

Dans le deuxième mode de réalisation représenté à la figure 7, les éléments de continuité sont au nombre de deux et sont formés chacun par un galet 17 monté dans l'espace intercalaire 3 pour pivoter autour d'un axe parallèle à l'axe support 2. Chaque galet 17 a une surface externe en tonneau qui affleure la surface externe des corps 1.1, 1.2.

Plus précisément, les galets 17 sont montés dans une chape qui s'étend dans l'espace intercalaire et qui est solidaire en rotation de l'axe support 2 et donc également de l'arbre 6.

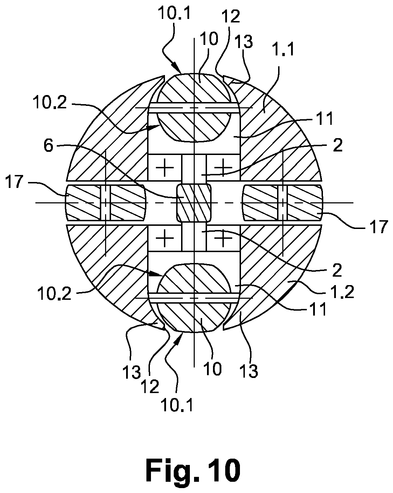

En variante, comme représenté sur la figure 10, la roue comprend deux galets 10 montés chacun dans un logement 11 ménagé dans chaque corps 1.1, 1.2 à chaque extrémité de l'axe support 2 de telle manière que chacun de ces galets 10 ait une portion de surface extérieure affleurant la surface externe du corps par une ouverture 12 du logement 11. Les galets 10 sont montés pour pivoter autour d'un axe de rotation orthogonal à l'axe support 2 et à l'arbre 6.

La surface extérieure de chaque galet 10 a sensiblement une forme de révolution autour de l'axe de rotation dudit galet 10 et comporte une portion centrale annulaire de roulement 10.1 affleurant la surface externe du corps 1.1, 1.2 par l'ouverture 12 du logement 11 et deux portions latérales annulaires 10.2 qui s'étendent au moins partiellement sous une lèvre 13 délimitant l'ouverture 12 du logement 11.

La portion centrale annulaire de roulement 10.1 a ici une forme en tonneau et les portions latérales annulaires 10.2 ont ici une forme de calotte sphérique.

Sous une charge très élevée supportée par la roue, la lèvre 13 peut se déformer élastiquement : les portions latérales annulaires 10.2 sont agencées pour former une surface d'appui pour la lèvre 13 dans son état déformé. Les portions latérales annulaires 10.2 comportent avantageusement un revêtement à faible coefficient de frottement facilitant le glissement de la lèvre 13 sur les portions latérales annulaires 10.2.

L'espace entre le bord de la lèvre 13 et la portion centrale annulaire de roulement 10.1 est réduit, ce qui permet de limiter la résistance au roulement et le bruit.

L'appui procuré aux lèvres par les portions latérales annulaires permet d'avoir des lèvres relativement minces sans porter préjudice aux capacités de support de charge de la roue.

L'invention a également pour objet un véhicule comportant un châssis porté par des roues conformes à l'invention.

En référence à la figure 8, le châssis 100 du véhicule a sensiblement une forme de triangle à chaque sommet duquel est montée une roue conforme au deuxième mode de réalisation (les sommets du triangle sont ici tronqués pour augmenter la compacité du véhicule).

C'est ici le stator de chaque moteur d'entraînement 30 qui est fixé au châssis 100 via un dispositif, non représenté, d'orientation des roues par rapport au châssis. Plus précisément, les stators sont ici montés sur des platines qui sont montées pivotantes sur le châssis autour d'un axe perpendiculaire au plan du châssis et qui sont associées chacune à un moteur permettant d'orienter les roues par rapport au châssis.

La fixation des roues au châssis est connue en elle-même ainsi que la commande de celles-ci.

En variante, comme représenté à la figure 9, le châssis 100 du véhicule a sensiblement une forme de carré à chaque sommet duquel est montée une roue conforme au deuxième mode de réalisation (les sommets du carré sont ici tronqués pour augmenter la compacité du véhicule).

Bien entendu, l'invention n'est pas limitée aux modes de réalisation décrits mais englobe toute variante entrant dans le champ de l'invention telle que définie par les revendications.

En particulier, dans le premier mode de réalisation, il est possible de prévoir un actionneur pour déplacer les pétales entre leur position affleurante et leur position escamotée de manière à provoque un effacement progressif des pétales devant l'arbre d'entraînement au fur et à mesure de la rotation de la roue et un rabattement des pétales après le passage de l'arbre d'entraînement.

Le véhicule peut avoir une autre structure que celle décrite et posséder par exemple un châssis de forme circulaire.

## Revendications

1. Roue sphérique comprenant un premier corps (1.1) et un deuxième corps (1.2) qui sont sensiblement hémisphériques et montés coaxialement l'un à l'autre pour pivoter sur un axe support (2), les corps étant séparés par un espace intercalaire (3) dans lequel s'étend un arbre (6) ayant une extrémité solidaire de l'axe support et une extrémité en saillie des corps, **caractérisée en ce que** s'étend dans l'espace intercalaire au moins un élément (7, 17) de continuité d'au moins une portion de surface externe des corps.

2. Roue selon la revendication 1, dans laquelle l'arbre (6) est relié à un moyen de motorisation.

3. Roue selon la revendication 1, dans laquelle l'élément de continuité est un pétale (7) articulé à un bord circulaire (5.1) du premier corps (1.1) pour être mobile entre une position affleurante dans laquelle il s'étend vers le deuxième corps (1.2) dans l'espace intercalaire (3) et une position escamotée dans laquelle il s'efface de l'espace intercalaire.

4. Roue selon la revendication 3, comprenant des éléments de continuité en forme de pétale (7) s'étendant à partir de chacun des corps (1.1, 1.2).

5. Roue selon la revendication 3, dans laquelle le pétale (7) en position affleurante prend appui sur le bord circulaire (5.2) du deuxième corps (1.2).

6. Roue selon la revendication 3, dans laquelle l'arbre (6) a sa portion d'extrémité reliée à l'arbre support (2) conformée pour amener l'élément de continuité (7) de sa position affleurante à sa position escamotée et l'élément de continuité (7) est relié, au corps auquel il est articulé, par un élément (8) de rappel élastique en position affleurante.

7. Roue selon la revendication 3, dans laquelle le pétale (7) a une forme sensiblement trapézoïdale ayant une grande base et le pétale est articulé par sa grande base au corps (1).

8. Roue selon la revendication 1, dans laquelle l'élément de continuité est un galet (17) monté dans l'espace intercalaire (3) pour pivoter autour d'un axe parallèle à l'axe support (2) en ayant une surface externe affleurant la surface externe des corps (1).

9. Roue selon la revendication 8, dans laquelle le galet (17) est monté dans une chape qui s'étend dans l'espace intercalaire (3) et qui est liée en rotation avec l'arbre (6).

10. Roue selon la revendication 1, comprenant des galets (10) montés dans un logement (11) ménagé dans chaque corps à chaque extrémité de l'axe support (2) de telle manière que chacun de ces galets ait une portion de surface extérieure affleurant la surface externe du corps par une ouverture (12) du logement, les galets étant montés pour pivoter autour d'un axe de rotation orthogonal à l'axe support (2) et à l'arbre (6).

11. Roue selon la revendication 10, dans laquelle la surface extérieure de chaque galet (10) a sensiblement une forme de révolution autour de l'axe de rotation dudit galet et comporte une portion centrale annulaire de roulement (10.1) affleurant la surface externe du corps par l'ouverture du logement et deux portions latérales annulaires (10.2) qui s'étendent au moins partiellement sous une lèvre (13) délimitant l'ouverture (12) du logement (11).

12. Roue selon la revendication 11, dans laquelle la lèvre (13) est susceptible de se déformer élastiquement et les portions latérales annulaires (10.2) forment une surface d'appui pour la lèvre dans son état déformé.

13. Roue selon la revendication 12, dans laquelle les portions latérales annulaires (10.2) comportent un revêtement à faible coefficient de frottement.

14. Véhicule comportant un châssis porté par des roues conformes à l'une quelconque des revendications précédentes.

## Patentansprüche

1. Kugelförmiges Rad, umfassend einen ersten Körper (1.1) und einen zweiten Körper (1.2), die im Wesentlichen halbkugelförmig und koaxial zueinander gelagert sind, um sich um eine Trägerachse (2) zu verschwenken, wobei die Körper durch einen Zwischenraum (3) getrennt sind, in den sich eine Welle (6) erstreckt, die ein Ende hat, das fest mit der Trägerachse verbunden ist, sowie ein Ende, das von den Körpern vorsteht, **dadurch gekennzeichnet, dass** sich in den Zwischenraum mindestens ein Element (7, 17), das mindestens einen Abschnitt der Außenfläche der Körper fortsetzt, erstreckt.

2. Rad nach Anspruch 1, bei dem die Welle (6) mit einem Antriebsmittel verbunden ist.

3. Rad nach Anspruch 1, bei dem das Fortsetzungselement ein Blatt (7) ist, das an einem kreisförmigen Rand (5.1) des ersten Körpers (1.1) angelenkt ist, um zwischen einer bündigen Position, in der es sich in Richtung des zweiten Körpers (1.2) in dem Zwischenraum (3) erstreckt, und einer ausgerückten Position beweglich zu sein, in der es sich aus dem Zwischenraum herausbewegt.

4. Rad nach Anspruch 3, umfassend Fortsetzungselemente in Form einer Blüte (7), die sich ab jedem der Körper (1.1, 1.2) erstreckt.

5. Rad nach Anspruch 3, bei dem die Blüte (7) in bündiger Position an dem kreisförmigen Rand (5.2) des zweiten Körpers (1.2) zur Anlage kommt.

6. Rad nach Anspruch 3, bei dem der mit der Trägerachse (2) verbundene Endabschnitt der Welle so geformt ist, dass er das Fortsetzungselement (7) von seiner bündigen Position in seine ausgerückte Position mitnimmt und das Fortsetzungselement (7) mit dem Körper, an dem es angelenkt ist, über ein elastisches Rückstellelement (8) zum Rückstellen in die bündige Position verbunden ist.

7. Rad nach Anspruch 3, bei dem die Blüte (7) eine im Wesentlichen trapezförmige Form hat, die eine große Basis hat, und die Blüte über ihre große Basis an dem Körper (1) angelenkt ist.

8. Rad nach Anspruch 1, bei dem das Fortsetzungselement eine Rolle (17) ist, die in dem Zwischenraum (3) gelagert ist, um sich um eine Achse parallel zur Trägerachse (2) zu verschwenken, wobei sie eine Außenfläche hat, die mit der Außenfläche der Körper (1) bündig abschießt.

9. Rad nach Anspruch 8, bei dem die Rolle (17) in einer Gabel gelagert ist, die sich in dem Zwischenraum (3) erstreckt und die drehfest mit der Welle (6) verbunden ist.

10. Rad nach Anspruch 1, umfassend Rollen (10), die in einer Aufnahme (11) gelagert sind, die in jedem Körper an jedem Ende der Trägerachse (2) derart ausgebildet ist, dass jede dieser Rollen einen Außenflächenabschnitt hat, der mit der Außenfläche des Körpers über eine Öffnung (12) der Aufnahme bündig abschließt, wobei die Rollen drehbar um eine Rotationsachse gelagert sind, die orthogonal zur Trägerachse (2) und zur Welle (6) ist.

11. Rad nach Anspruch 10, bei dem die Außenfläche jeder Rolle (10) im Wesentlichen eine Rotationsform um die Rotationsachse der Rolle hat und einen ringförmigen zentralen Rollabschnitt (10.1) umfasst, der mit der Außenfläche des Körpers über die Öffnung der Aufnahme bündig abschließt, sowie zwei ringförmige Seitenabschnitte (10.2), die sich zumindest teilweise unter einer Lippe (13) erstrecken, die die Öffnung (12) der Aufnahme (11) begrenzt.

12. Rad nach Anspruch 11, bei dem die Lippe (13) elastisch verformbar ist und die ringförmigen Seitenabschnitte (10.2) eine Anlagefläche für die Lippe in ihrem verformten Zustand bilden.

13. Rad nach Anspruch 12, bei dem die ringförmigen Seitenabschnitte (10.2) einen Überzug mit einem geringen Reibungskoeffizienten umfassen.

14. Fahrzeug, umfassend ein Chassis, das von Rädern gemäß einem der vorhergehenden Ansprüche getragen wird.

## Claims

1. A spherical wheel comprising a first body (1.1) and a second body (1.2) which are substantially hemispherical and are mounted coaxially to one another so as to pivot about a support axle (2), said bodies being separated by an interstice (3) into which there extends a shaft (6) having an end that is rigidly connected to the support axle and an end projecting from the bodies, **characterized in that** at least one element (7, 17) extending at least one portion of the outer surface of the bodies extends into the interstice.

2. The wheel as claimed in claim 1, in which the shaft (6) is connected to a driving means.

3. The wheel as claimed in claim 1, in which the extending element is a petal (7) that is articulated on a circular edge (5.1) of the first body (1.1) in order to be mobile between a flush position in which it extends towards the second body (1.2) in the interstice (3) and a retracted position in which it moves away from the interstice.

4. The wheel as claimed in claim 3, comprising extending elements in the form of a petal (7) extending from each of the bodies (1.1, 1.2).

5. The wheel as claimed in claim 3, in which the petal (7) in the flush position is supported on the circular edge (5.2) of the second body (1.2).

6. The wheel as claimed in claim 3, in which the shaft (6) has its end portion that is connected to the support axle (2) shaped to bring the extending element (7) from its flush position to its retracted position and the extending element (7) is connected, to the body on which it is articulated, by an elastic element (8) for returning it into the flush position.

7. The wheel as claimed in claim 3, in which the petal (7) has a substantially trapezoidal form having a large base and the petal is articulated via its large base to the body (1).

8. The wheel as claimed in claim 1, in which the extending element is a roller (17) that is mounted in the interstice (3) so as to pivot about an axis parallel to the support axle (2) having an outer surface that is flush with the outer surface of the bodies (1).

9. The wheel as claimed in claim 8, in which the roller (17) is mounted in a jaw which extends into the interstice (3) and which is rotationally coupled with the shaft (6).

10. The wheel as claimed in claim 1, comprising rollers (10) that are mounted in a housing (11) arranged in each body at each end of the support axle (2) in such a way that each of said rollers has a portion of the outer surface that is flush with the outer surface of the body through an opening (12) in the housing, the rollers being mounted so as to pivot about an axis of rotation that is orthogonal to the support axle (2) and to the shaft (6).

11. The wheel as claimed in claim 10, in which the outer surface of each roller (10) substantially has a form of revolution about the axis of rotation of said roller and includes a central annular rolling portion (10.1) that is flush with the outer surface of the body via the opening in the housing and two lateral annular portions (10.2) which extend at least partially beneath a lip (13) delineating the opening (12) in the housing (11).

12. The wheel as claimed in claim 11, in which the lip (13) is capable of being deformed elastically and the lateral annular portions (10.2) form a supporting surface for the lip in its deformed state.

13. The wheel as claimed in claim 12, in which the lateral annular portions (10.2) include a coating with a low coefficient of friction.

14. Vehicle comprising a chassis that is supported by wheels in accordance with one of the preceding claims.
